(19) Europäisches Patentamt
European Patent Office
Office européen des brevets

(11) EP 2 521 739 B1

(12) **EUROPÄISCHE PATENTSCHRIFT**

(45) Veröffentlichungstag und Bekanntmachung des Hinweises auf die Patenterteilung:
**26.03.2014 Patentblatt 2014/13**

(21) Anmeldenummer: **10798081.5**

(22) Anmeldetag: **20.12.2010**

(51) Int Cl.:
***C08F 2/38*** $^{(2006.01)}$ ***C08F 220/16*** $^{(2006.01)}$
***C09J 133/04*** $^{(2006.01)}$ ***C09J 133/06*** $^{(2006.01)}$
***C09J 7/02*** $^{(2006.01)}$

(86) Internationale Anmeldenummer:
**PCT/EP2010/070222**

(87) Internationale Veröffentlichungsnummer:
**WO 2011/083035 (14.07.2011 Gazette 2011/28)**

(54) **MULTIMODALE COPOLYMERE, DEREN HERSTELLUNG UND VERWENDUNG IN HAFTKLEBEMASSEN**

MULTIMODAL COPOLYMERS, PROCESS OF PRODUCTION AND USE IN PRESSURE SENSITIVE ADHESIVES

COPOLYMERES MULTIMODAUX, LEURS PROCEDES DE FABRICATION ET LEURS UTILISATIONS EN TANT QU’ADHESIFS SENSIBLES Ä LA PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.01.2010 DE 102010000750**

(43) Veröffentlichungstag der Anmeldung:
**14.11.2012 Patentblatt 2012/46**

(73) Patentinhaber: **Tesa SE**
**20253 Hamburg (DE)**

(72) Erfinder:
- **DOLLASE, Thilo**
  **22397 Hamburg (DE)**
- **PRENZEL, Alexander**
  **20259 Hamburg (DE)**
- **LÜBBERT, Niko**
  **20535 Hamburg (DE)**

(56) Entgegenhaltungen:
**WO-A1-99/20669 WO-A1-2004/056884**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 521 739 B1

## Beschreibung

Die vorliegende Erfindung betrifft ein radikalisches (Co)polymerisationsverfahren sowie nach diesem Verfahren erhältliche (Co)polymere. Ferner betrifft die Erfindung Haftklebemassen, umfassend diese (Co)polymere, und haftklebrige Produkte auf Basis solcher Haftklebemassen.

*Stand der Technik*

Doppelseitig haftklebrige Produkte bieten aufgrund ihrer im Vergleich zu Flüssigklebern einfachen Verarbeitbarkeit, permanenten Klebrigkeit und der Tatsache, dass sie nach der Applikation nicht aushärten müssen, einen hohen Nutzen in Anwendungsbereichen des verbindenden Klebens. Man unterscheidet unter ihnen Produkte, die ein Trägermaterial enthalten. Zu ihnen zählen doppelseitige Klebebänder und trägerfreie Produkte, wie z.B. so genannte Transferklebebänder. In beiden Produktkategorien sind die obere und die untere Oberfläche haftklebrig, also permanent klebrig. Um diese Oberflächen bis zum Anwendungszeitpunkt gegen Verschmutzung und ungewolltes vorzeitiges Verkleben zu schützen, werden die haftklebrigen Oberflächen typischerweise temporär mit wiederablösbaren Hilfsträgermaterialen eingedeckt. Handelt es sich bei den doppelseitig haftklebrigen Produkten um Blattware, dann wird zur Eindeckung der Unterseite ein Blatt eines Hilfsträgermaterials verwendet und für die Oberseite ein zweites. Werden die doppelseitig haftklebrigen Produkte in Rollenform konfektioniert, dann können ebenfalls zwei Hilfsträgermaterlialien zum Einsatz kommen oder auch eine einzige Bahn, die vorder- und rückseitig so vorbereitet ist, dass sie sich zum Zeitpunkt der Anwendung vom haftklebrigen Produkt zunächst von einer haftklebrigen Oberfläche und danach von der zweiten wieder ablösen lassen.

In Anwendungen des verbindenden Klebens stellt sich stets die Anforderung, eine anwendungsgerechte Kombination aus adhäsiven und kohäsiven Eigenschaften des haftklebrigen Produkts zu erreichen. Unter adhäsive Eigenschaften fällt die Klebkraft, die eine zentrale Charakterisierungsgröße für Haftklebemassen bzw. daraus erzeugte Klebeschichten darstellt. Unter die kohäsiven Eigenschaften fällt die Scherfestigkeit, eine weitere zentrale Charakterisierungsgröße für Haftklebemassen bzw. daraus erzeugte Klebeschichten. Üblicherweise handelt es sich bei kohäsiven und adhäsiven Eigenschaften um sich gegenseitig widersprechende Charakteristika. Optimierung der jeweils einen führt häufig zu einer Verschlechterung der jeweils anderen. Es besteht die stetige Aufgabe, kohäsive und adhäsive Eigenschaften einer Haftklebemasse anwendungsrelevant auszubalancieren. Darüber hinaus existiert die grundsätzliche Aufgabe, Konzepte zu finden, über die sowohl die kohäsiven als auch die adhäsiven Eigenschaften einer Haftklebemasse, gleichzeitig verbessert werden können.

Stellen die Klebkraft und die Scherfestigkeit gängige Methoden zur grundsätzlichen und leicht durchführbaren Charakterisierung von Haftklebemassen bzw. haftklebrigen Produkten, die erstgenannte enthalten, dar, so sind es meist indirekt mit diesen Eigenschaften verknüpfte anwendungstechnische Kriterien, die die Auswahl eines haftklebrigen Produkts für eine gegebene Nutzung bestimmen. So stehen die adhäsiven Eigenschaften der Haftklebemasse eher mit der "Weichheit" des Systems in Verbindung, die kohäsiven dagegen eher mit der "Härte". Als ein Beispiel für eine anwendungsrelevante Anforderung, die mit den kohäsiven Eigenschaften der Klebeschicht verbunden ist, sei ihre rückstandsfreie Wiederablösbarkeit von einer Verklebungsoberfläche genannt. Ein Beispiel für eine anwendungsrelevante Anforderung, die mit den adhäsiven Eigenschaften der Klebeschicht verbunden ist, ist das Aufziehoder Laminierverhalten der Haftklebeschicht auf eine zu verklebende Oberfläche, d. h. wie schnell nach Applikation des haftklebrigen Produkts die ultimative Klebfestigkeit für eine Verklebung erreicht wird. Auch für solche anwendungsrelevanten Kriterien gilt, dass sie sich gegenseitig bedingen, und es besteht häufig ebenfalls die Aufgabe, solche anwendungsrelevanten Kriterien, die mit der Kohäsion einer Haftklebemasse zusammenhängen, und solche anwendungsrelevanten Kriterien, die mit den adhäsiven Eigenschaften einer Haftklebemasse zusammenhängen, auszubalancieren und/oder gleichzeitig zu verbessern.

Auch wenn die oben genannte Aufgabe bereits von ausgesprochener Komplexität ist, so besteht darüber hinaus auch noch die Notwendigkeit, Haftklebemassesysteme nicht nur mit einem ausbalancierten anwendungstechnischen Leistungsprofil zur Verfügung zu stellen, sondern für diese Haftklebemassesysteme auch noch die Prozessierbarkeit, insbesondere ausreichendes Beschichtungs-/Schneid- und Stanzverhalten im Hinblick auf Prozessgängigkeit, Qualität und Wirtschaftlichkeit, sicherzustellen. Diese zusätzliche Anforderung engt die Menge der geeigneten Haftklebemassesysteme weiter ein. Daraus folgt der Bedarf, weitere und/oder verbesserte Konzepte zur Verfügung zu stellen, über die eine geeignete Balance aus Eigenschaftsprofil und Prozessierbarkeit erreicht wird.

Eine wichtige Rohstoffklasse für Haftklebemassen stellen die acrylatbasierenden Klebemassen dar. Acrylatbasierende Haftklebemassen bestechen insbesondere durch ihre Eignung in (z. B. optisch) qualitativ hochwertigen Verklebungen mit hoher Beständigkeit. Sie werden üblicherweise durch Copolymerisation geeigneter Monomergemische in organischen Lösungsmitteln, Wasser oder Substanz polymerisiert und meist über Zugabe von Vernetzern oder durch Einfluss von Strahlung und/oder Wärme vernetzt. Einflussgrößen zur Steuerung der klebtechnischen Eigenschaften sind vor allem die Molmasse der so erzeugten Basispolymere, die Zusammensetzung der Basispolymere, die Art und

der Grad der Vernetzung und ggf. die Menge und Art an Zusätzen wie Klebharzen und Weichmachern. Die gängigen Konzepte werden beispielsweise in den Darstellungen von Everaerts [A. I. Everaerts, L. M. Clemens in "Adhesion Science & Engineering, Bd. 2, M. Chaudhury, A. V. Pocius (Hrsg.), 2002, Elsevier, Amsterdam, S. 485-505] oder Satas [D. Satas et al. bzw. A. Zosel et al. in "Handbook of Pressure Sensitive Adhesives Technology", D. Satas (ed.), 3. Aufl., 1999, Satas & Associates, Warwick, S. 444-549] behandelt.

Es wurde bereits erkannt, dass ein Weg, die Balance aus Kohäsion und Adhäsion zu steuern und möglicherweise sogar beide Kriterien gleichzeitig zu verbessern, darin liegt, verschiedene Acrylatcopolymere miteinander zu mischen. Um beispielsweise bei bereits guter Scherfestigkeit und Klebkraft auch noch die Anfassklebrigkeit (Tack) von Etikettenklebern zu verbessern, schlägt Satas vor, einer Dispersion oder Lösung eines hochmolekularen Acrylatcopolymers eine Dispersion bzw. Lösung eines kürzerkettigen Acrylatcopolymers zuzusetzen [D. Satas et al. in "Handbook of Pressure Sensitive Adhesives Technology", D. Satas (ed.), 3. Aufl., 1999, Satas & Associates, Warwick, S. 455f und S. 485].

Das Molekulargewicht von Polymerisaten kann durch Einsatz geeigneter Regler eingestellt (reduziert) werden [H.-G. Elias, Makromoleküle, Bd. 1, 6. Aufl., 1999, Wiley-VCH, Weinheim, S. 334-340]. Als Reglersysteme sind u. a. kurz- und langkettige Alkylmercaptane genannt. Außerdem wurden Limonen und $\alpha$-Methylstyrol Dimer als Reglersysteme genannt.

Durch Einfluss von Reglern können kurzkettige Polymere hergestellt werden, die dann zum Beispiel in binären Polymermischungen, also ausgehend von zwei Lösungen oder Dispersionen von Polymeren unterschiedlichen Molekulargewichts, formuliert werden.

Um dem Anspruch, immer effizienter zu produzieren, Rechnung zu tragen, sind solche Mischkonzepte oftmals nicht bevorzugt, da die zumindest zwei polymeren Bestandteile für eine binäre Polymermischung in getrennten Polymerisationsansätzen hergestellt und in einem anschließenden weiteren Prozess gemischt werden müssen.

Es ist jedoch auch denkbar, die Molekulargewichtsverteilung in einer Polymerisation so zu steuern, dass das resultierende Polymerisat bereits aus dieser einen einzigen Polymerisation durch zwei Kurvenmaxima in der Molekulargewichtsverteilung charakterisiert ist. Jedes dieser Maxima bezieht sich dann auf eine sogenannte Polymermode. Im Fall von zwei Maxima spricht man entsprechend von einer bimodalen Molekulargewichtsverteilung oder vereinfacht von bimodalen Polymeren. Verteilungen mit mehr als zwei Maxima nennt man entsprechend trimodal bei drei Maxima usw.. Allgemein werden im Sinne dieser Erfindung Polymere als multimodal bezeichnet, die mehr als ein Kurvenmaximum in der Molekulargewichtsverteilung aufweisen. Es ist auch möglich, dass einzelne Kurvenmaxima nicht vollständig aufgelöst sind, so dass beispielsweise nur ein Maximum auftritt und die weiteren Polymermode(n) als Schulter(n) erkennbar sind.

Ein Verfahren zur Herstellung bimodaler Acrylathaftklebemassen schlägt die WO 2004/056884 vor. In einer zweistufigen Polymerisation wird die langkettige Polymermode in einer ersten Stufe und die kurzkettige Polymermode durch Einfluss eines Reglers in einer zweiten Stufe erhalten. Als Reglersysteme werden Alkohole, Ether, Dithioether, Dithiocarbonate, Trithiocarbonate, Nitroxide, Alkylbromide, Thiole, TEMPO (2,2,6,6-Tetramethylpiperidin-1-oxyl) und TEMPO-Derivate genannt. Es wird insbesondere die Verwendung von iso-Propanol als Regler beschrieben. Iso-Propanol als Regler ist in vielen Fällen vorteilhaft, da es nach einem Trocknungsprozess nicht im Produkt verbleibt, gesundheitlich unbedenklich ist und unkritisch im Hinblick auf Geruch und Farbe. Auf Grund einer relativ geringen Kettenübertragungskonstante muss jedoch ein recht hoher Anteil dieses Reglers zum Einsatz kommen, was einen Einfluss auf die Lösungseigenschaften des entstehenden Polymers haben kann.

Ferner gibt EP 1 882 707 bimodale Polymere sowie Verfahren zu deren Herstellung an. Als Regler werden Alkohole, Ether, Dithioether, Dithiocarbonate, Trithiocarbonate, Nitroxide, Alkylbromide, Thiole, TEMPO (2,2,6,6-Tetramethylpiperidin-1-oxyl) und TEMPO-Derivate genannt, wobei iso-Propanol, Dithiobenzoesäurebenzylester, Dithioessigsäureethylester, Bis-2,2'-phenylethyltrithiocarbonat und Dibenzyltrithiocarbonat als besonders bevorzugte Reglervarianten hervorgehoben werden. Nicht alle diese Reglersysteme sind kommerziell verbreitet. Ferner weisen schwefelhaltige Substanzen oft einen zumindest geringen Gelbstich auf, was mit der Substanz selbst aber auch mit in geringfügigem Maße vorhandenen Verunreinigungen zusammenhängen kann. In optisch hochwertigen Verklebungsanwendungen ist jedoch ein hoher Reinheitsgrad erforderlich, d.h. ein auch nur geringer Gelbstich soll typischerweise vermieden werden.

Alle diese Beispiele für sich unternehmen den Versuch, ein spezielles klebtechnischanwendungstechnisches Leistungsprofil zu erreichen, indem sie Basispolymere für Haftklebemasse durch Realisierung einer bimodalen Molekulargewichtsverteilung umfassend lang- und kurzkettige Polymermoden aufbauen.

In keiner der aufgeführten Schriften ist jedoch ein Ansatz offenbart, der neben der Einstellung des speziellen klebtechnisch-anwendungstechnischen Leistungsprofils auch noch eine gute Prozessierbarkeit, insbesondere ein verbessertes Beschichtungsverhalten im Hinblick auf Prozessgängigkeit, Qualität und Wirtschaftlichkeit gewährleistet.

Es besteht daher weiterhin die Notwendigkeit, Haftklebemassen zur Verfügung zu stellen, die eine ausgezeichnete Balance aus kohäsiven und adhäsiven Eigenschaften aufweisen und gleichzeitig verbesserte Prozessierbarkeit zeigen. Es besteht zudem die Aufgabe, Reglersysteme anzugeben, die sich im Hinblick auf Aspekte wie Reinheitsgrad (Farbe), Geruch, Reglereffizienz, Wirtschaftlichkeit, Kompatibilität mit anderen Formulierungsbestandteilen und Gefährdungspotenzial positiv von denen aus dem Stand der Technik bekannten abheben und mit ihnen verbundene Nachteile lösen.

*Erfindung*

Diese Aufgabe konnte gelöst werden durch die Verwendung von Aminosäuren als Reglersubstanzen bei der radikalischen (Co)polymerisation von insbesondere Acrylund/oder Methacrylmonomeren zur Herstellung von (Meth)acrylatcopolymeren, bevorzugt von Monomermischungen enthaltend zumindest 70 Gew.-% zumindest eines Acrylsäureund/oder Methacrylsäureesters. Der Ausdruck (Co)polymerisation und der Begriff (Co)polymerisieren umfassen dabei im Sinne der vorliegenden Erfindung sowohl eine Copolymerisation verschiedener Monomere als auch eine Polymerisation einheitlicher Monomere sowie das Copolymerisieren beziehungsweise Polymerisieren hiervon. Bevorzugt im Sinne der vorliegenden Erfindung handelt es sich bei der (Co)polymerisation um eine Copolymerisation.

So betrifft die Erfindung ein radikalisches (Co)polymerisationsverfahren umfassend die folgenden Schritte:

(a) das Bereitstellen eines Monomers bzw. eines Monomergemisches mit ungesättigten C=C-Doppelbindungen;
(b) das Starten der radikalischen (Co)polymerisation durch eine erste Zugabe eines Initiators; sowie anschließend
(c) die Zugabe zumindest einer Aminosäure als Reglersubstanz,

wobei die Zugabe der Reglersubstanz nach Erreichen eines Umsatzes von 50 % bezogen auf die ungesättigten C=C-Doppelbindungen des in Schritt (a) bereitgestellten Monomers bzw. Monomergemisches erfolgt.

In einer bevorzugten Ausführungsform der Erfindung erfolgt die Zugabe der Reglersubstanz nach Erreichen eines Umsatzes von 60 %, besonders bevorzugt 70 % bezogen auf die ungesättigten C=C-Doppelbindungen. In einer weiteren Ausführungsform der Erfindung erfolgt die Zugabe der Reglersubstanz bis zum Erreichen eines.Umsatzes von 95 %, bevorzugt 90 %, besonders bevorzugt 80 % bezogen auf die ungesättigten C=C-Doppelbindungen des in Schritt (a) bereitgestellten Monomers bzw. Monomergemisches. Zur Bestimmung des Umsatz kann die Reaktion mittels einer NIR-Sonde gemäß Testmethode E verfolgt werden. Andere Verfahren zur Umsatzbestimmung wie z.B. gaschromatographische Methoden sind ebenfalls aussagekräftig und können ebenfalls zur Verfolgung des Umsatzes herangezogen werden. Die Zugabe der Reglersubstanz vor Erreichen eines Umsatzes von 50% bezogen auf die ungesättigten C=C-Doppelbindungen des in Schritt (a) bereitgestellten Monomers bzw. Monomergemisches führt dazu, dass die resultierenden (Co)polymere nicht die erforderliche Prozessierbarkeit bei gleichzeitig ausgezeichneter Balance aus kohäsiven und adhäsiven Eigenschaften aufweisen.

Die Reglersubstanz in Schritt (c) des erfindungsgemäßen Verfahrens wird bevorzugt in einer Menge von 0.05 bis 5 mol.-% bezogen auf das in Schritt (a) bereitgestellte Monomer bzw. Monomergemisch zugegeben. Als Reglersubstanz werden bevorzugt Reglersysteme auf Basis thiol-, selanyl- und/oder hydroxygruppenhaltiger natürlicher und/oder unnatürlicher, aromatischer und nicht-aromatischer Aminosäuren eingesetzt.

In einer bevorzugten Ausführungsform der Erfindung weist die zumindest eine Aminosäure mindestens eine Sulfanylgruppe (im Folgenden auch als Thiolgruppen oder -SH-Gruppe bezeichnet), mindestens eine Selanylgruppe (im Folgenden auch als -SeH-Gruppe bezeichnet) und/oder eine Hydroxygruppe (im folgenden auch als -OH-Gruppe bezeichnet) auf. In einer besonders bevorzugten Ausführungsform der Erfindung sind die vorgenannten Gruppen in der Aminosäure endständig, also primär. Es sind jedoch auch sekundäre und tertiäre Ausführungsformen denkbar.

Die zumindest eine Aminosäure wird bevorzugt ausgewählt aus einer Gruppe von Verbindungen der folgenden allgemeinen Strukturformeln (I) und (II)

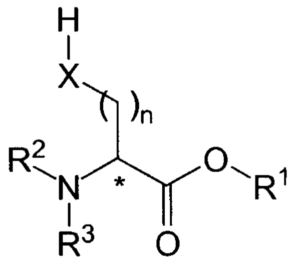

(I)

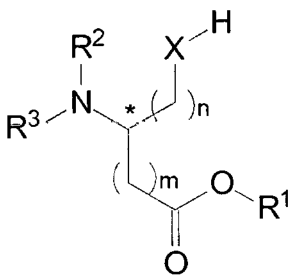

(II)

wobei $R^1$, $R^2$ und $R^3$ jeweils unabhängig voneinander ausgewählt sind aus der Gruppe bestehend aus Alkyl, Alkenyl, Alkinyl, Aryl, Heterocyclyl, Wasserstoff, Acyl, Alkanoyl, Cycloalkancarbonyl, Arencarbonyl, Alkoxycarbonyl, Carbamoyl und Sulfonyl, oder wobei R1 ausgewählt ist aus der Gruppe bestehend aus Alkyl, Alkenyl, Alkinyl, Aryl, Heterocyclyl, Wasserstoff, Acyl, Alkanoyl, Cydoalkancarbonyl, Arencarbonyl, Alkoxycarbonyl, Carbamoyl und Sulfonyl, und R2 und R3 gemeinsam mit dem N-Atom, an das sie gebunden sind, eine cyclische Gruppe darstellen. X in den Formeln (I) und (II) wird ausgewählt aus Sauerstoff (O), Schwefel (S) oder Selen (Se) und der Index n ist eine natürliche ganze Zahl einschließlich Null. Bevorzugt gilt $0 \leq n \leq 18$. Index m ist eine natürliche ganze Zahl größer 0. Bevorzugt ist m = 1 oder 2.

In einer bevorzugten Ausführungsform der Erfindung wird $R^1$ in Formeln (I) oder (II) ausgewählt aus der Gruppe (i) umfassend

(i) lineare und verzweigte $C_1$- bis $C_{18}$-Alkylreste, lineare und verzweigte $C_2$- bis $C_{18}$-Alkenylreste, lineare und verzweigte $C_2$- bis $C_{18}$-Alkinylreste, Arylreste, cycloaliphatische, aliphatische und aromatische Heterocyclen, Wasserstoff, und

$R^2$ und $R^3$ werden ausgewählt aus der vorstehenden Gruppe (i) oder aus der Gruppe (ii), umfassend:

(ii) Acylreste, insbesondere Alkanoylreste und Cycloalkancarbonylreste und Arencarbonylreste (-C(O)-R'), Alkoxycarbonylreste (-C(O)-O-R'), Carbamoylreste (-C(O)-NR'R"), Sulfonylreste ($-SO_2R'$),

wobei R' und R" jeweils unabhängig voneinander ausgewählte Reste aus der Gruppe (i) sind.

Stellen R2 und R3 gemeinsam mit dem N-Atom, an das sie gebunden sind, eine cyclische Gruppe dar, so bilden R2 und R3 bevorzugt ein substituiertes oder unsubstituiertes C1-C6-Alkylen, C1-C6-Alkylen-O-C1-C6-Alkylen, C1-C6-Alkylen-CONH-C1-C6-Alkylen oder C1-C6-Alkylen-COO-C1-C6-Alkylen.

Die Aminosäuren der Formeln (I) und (II) weisen ein stereogenes Zentrum auf (gekennzeichnet durch den Stern * in der Abbildung) und sind damit chiral. In einer vorteilhaften Ausführungsform der Erfindung wird die zumindest eine Aminosäure als optisch reine Substanz in der (D)- oder (L)-Konfiguration oder als racemisches oder jedes beliebige weitere Gemisch eingesetzt.

In einer besonders bevorzugten Ausführungsform der Erfindung weist die Aminosäure einen Schmelzpunkt von 20°C oder höher, bevorzugt von 50°C oder höher auf. Bevorzugt ist die Aminosäure Cystein oder ein Derivat hiervon, das bevorzugt am Stickstoff acyliert ist. Besonders bevorzugt handelt es sich hierbei um N-Acetyl-Cystein. N-Acetyl-Cystein eignet sich als N-Acetyl-(L)-Cystein, N-Acetyl-(D)-Cystein und jede beliebige Mischung aus diesen Enantiomeren sowie als racemisches Gemisch.

Als Monomere bzw. Monomergemische, die in dem erfindungsgemäßen Verfahren (co)polymerisiert werden, können alle dem Fachmann bekannten radikalisch polymerisierbaren C=C-Doppelbindungs-haltigen Monomere verwendet werden. Bevorzugt werden hierbei $\alpha,\beta$-ungesättigte Carbonsäuren und ihre Derivate der allgemeinen Struktur

$$CH_2=C(R^1)(COOR^2) \qquad (III)$$

als Edukte eingesetzt, wobei $R^1$ = H oder $CH_3$ und $R^2$ = H oder lineare, verzweigte oder ringförmige, gesättigte oder ungesättigte Alkylreste mit 1 bis 30, bevorzugt mit 4 bis 18 Kohlenstoffatomen darstellt, mit oder ohne zusätzliche Substituenten wie Hydroxy-, C1-C6-Alkoxy-, Halogen-, Hydroxyalkyl-, Amino-, Alkylamino-, Acylamino-, Carboxyl-, Alkoxycarbonyl-, Sulfonsäure-, Sulfonsäureester-, Alkylsulfonyl-, Arylsulfonyl-, Sulfonyl-, und Sulfonamidgruppen.

Monomere, die sehr bevorzugt im Sinne der allgemeinen Struktur (III) eingesetzt werden, umfassen Acryl- und Methacrylsäureester mit Alkylgruppen bestehend aus 4 bis 18 C-Atomen. Spezifische Beispiele für zum Einsatz kommende Verbindungen sind, ohne sich durch diese Aufzählung einschränken zu wollen:

Methylacrylat, Ethylacrylat, Propylacrylat, Methylmethacrylat, Ethylmethacrylat, Benzylacrylat, Benzylmethacrylat,

sec.-Butylacrylat, tert-Butylacrylat, Phenylacrylat, Phenylmethacrylat, Isobornylacrylat, Isobornylmethacrylat, t-Butylphenylacrylat, t-Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxy-Polyethylenglykolmethacrylat 350, Methoxy-Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluoro-butylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methyl-undecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N,N*-Dialkyl-substituierte Amide, wie beispielsweise *N,N*-Dimethylacrylamid, *N,N*-Dimethylmethacrylamid, *N*-Benzylacrylamide, *N*-Isopropylacrylamid, *N*-tert-Butylacrylamid, *N-tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, $\alpha$-Methylstyrol, o- und p-Methylstyrol, o-Butylstyrol, 4-n-Butylstyrol, 4-n-Decylstyrol, 3,4-Dimethoxystyrol, Makromonomere wie 2-Polystyrolethylmethacrylat (Molekulargewicht $M_w$ von 4000 bis 13000 g/mol), Polymethylmethacrylatethylmethacrylat ($M_w$ von 2000 bis 8000 g/mol).

Weiterhin können prinzipiell im Sinne der Erfindung alle vinylisch-funktionalisierten Verbindungen eingesetzt werden, die mit den zuvor genannten Monomeren copolymerisierbar sind.

Die Monomere können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind z.B. Benzoin(meth)acrylat- und (meth)acrylatfunktionalisierte Benzophenonderivat-Monomere, die eine Vernetzung durch Elektronenbestrahlung unterstützen, z.B. Tetrahydrofurfuryl(meth)acrylat, *N-tert*-Butyl(meth)acrylamid, Allyl(meth)acrylat, wobei diese Aufzählung nicht abschließend ist.

In einer bevorzugten Ausführungsform des erfindungsgemäßen Verfahrens umfasst das Monomergemisch wenigstens einen Acryl- und/oder Methacrylsäureester. Besonders bevorzugt umfasst das Monomergemisch zumindest 70 Gew.-% wenigstens eines Acryl- und/oder Methacrylsäureesters.

Die vorliegende Erfindung betrifft ferner (Co)polymere, die nach dem erfindungsgemäßen Verfahren erhältlich sind. In einer bevorzugten Ausführungsform ist das (Co)polymer ein (Meth)acrylat(co)polymer, das zumindest eine kurzkettige sowie eine langkettige Polymermode (a) bzw. (b) aufweist:

(a) eine kurzkettige Polymermode mit einem Molekulargewicht $M_P$(kurz) von mindestens 5.000 g/mol und höchstens 100.000 g/mol, bevorzugt von mindestens 15.000 g/mol und höchstens 60.000 g/mol, sowie

(b) eine langkettige Polymermode mit einem Molekulargewicht $M_P$(lang) von mindestens 500.000 g/mol und höchstens 3.000.000 g/mol, bevorzugt von mindestens 800.000 g/mol und höchstens 2.000.000 g/mol. Die Molekulargewichte $M_P$(kurz) und $M_P$(lang) werden dabei bestimmt am entsprechenden lokalen Maximum der Molekulargewichtsverteilung bzw., falls das Molekulargewichtsverteilungsmaximum dieser Polymermode nicht aufgelöst ist und lediglich als Schulter in der Molekulargewichtsverteilung auftaucht, am Punkt der Änderung der Krümmungsrichtung im Bereich der konvexen Ausformung der entsprechenden Schulter.

In einer besonders bevorzugten Ausführungsform der Erfindung umfasst das erfindungsgemäße (Co)polymer wenigstens 50 Gew.-%, bevorzugt wenigstens 70 Gew.-%, besonders bevorzugt 90 Gew.-% der langkettigen Polymermode (b) bezogen auf die Gesamtmenge der kurz- und langkettigen Polymermoden (a) und (b).

Im Sinne der vorliegenden Erfindung sind unter den aufgeführten Molekulargewichten solche zu verstehen sind, die über gelpermeationschromatographische Bestimmungen erhalten werden. Gelöste Proben der betreffenden (Co)polymere werden hierzu nach ihrem hydrodynamischen Volumen getrennt und die resultierenden Fraktionen zeitversetzt detektiert. Das Molekulargewicht der einzelnen Fraktionen wird nach Kalibrierung über Polystyrol-Standards angegeben. Das Zahlenmittel $M_N$ entspricht dem ersten Moment der Molekulargewichtsverteilung, das Gewichtsmittel $M_W$ dem zweiten. Diese Werte werden rechnerisch aus den Messkurven ermittelt. Lokale Maxima der Verteilungen $M_P(i)$ für die Polymermode i werden entweder ebenfalls über die Auswertesoftware mathematisch oder graphisch aus den

Messkurven ermittelt. Etwaige Schultern werden graphisch aus den Messkurven ermittelt.

Die Erfindung betrifft darüber hinaus Haftklebemassen, umfassend das nach dem erfindungsgemäßen Verfahren erhältliche (Co)polymer. Ferner betrifft die vorliegende Erfindung haftklebrige Produkte, die diese Haftklebemasse umfassen. In einer besonderen Ausführungsform ist das haftklebrige Produkt eine gestanzte Laminierfolie.

Bevorzugt liegt die Haftklebemasse in den erfindungsgemäßen haftklebrigen Produkten in Form einer Schicht vor. Die Schichtdicke der Haftklebemasse in den erfindungsgemäßen haftklebrigen Produkten ist keiner besonderen Beschränkung unterworfen. In einer besonderen Ausführungsform umfasst diese Erfindung haftklebrige Produkte, deren Haftklebemasse eine Schichtdicke von mindestens 75 µm, bevorzugt mindestens 150 µm, noch bevorzugter mindestens 200 µm aufweist. Überraschenderweise wurde gefunden, dass die haftklebrigen Produkte trotz großer Schichtdicken in sehr hoher optischer Qualität im Hinblick auf Beschichtungsbild, Blasenfreiheit und Freiheit von Verlaufsspuren herstellbar sind.

Die erfindungsgemäßen multimodalen, insbesondere bimodalen (Co)polymeren können hervorragend als/in Klebemassen, insbesondere Haftklebemassen und Heißsiegelmassen zum Einsatz kommen. Anwendungsbezogen wird die Zusammensetzung der (Co)polymere ausgewählt. Eine wichtige Eigenschaft für die multimodalen, insbesondere bimodalen (Co)polymere, wenn sie zum Beispiel in Klebemassen eingesetzt werden, ist ihre Glasübergangstemperatur $T_G$.

Zur Erzielung einer gewünschten Glasübergangstemperatur wird die mengenmäßige Zusammensetzung der Monomermischung vorteilhaft derart gewählt, dass sich nach einer Gleichung (G1) in Analogie zur *Fox*-Gleichung [T.G. Fox, Bull. Am. Phys. Soc., 1956, 1, 123ff] der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige statische Glasübergangstemperatur des Homopolymers aus den jeweiligen Monomeren n in K (Kelvin). Für Haftklebemassen wird die Glasübergangstemperatur üblicherweise bei kleiner als 25 °C eingestellt. Entsprechend wird eine Basis an Comonomeren ausgewählt. Für Heißsiegelmassen liegt die Glasübergangstemperatur bevorzugt bei mindestens 0 °C.

Multimodale, insbesondere bimodale Copolymere weisen vorteilhaft in ihrer Zusammensetzung zumindest zwei Sorten an Comonomeren auf, von denen zumindest eine Sorte als Bauelement zumindest eine Funktionalität trägt, die zu einer Vernetzungsreaktion befähigt. Die zur Vernetzung befähigte Comonomersorte ist vorteilhaft zu mindestens 1 mol-% in der Comonomerzusammensetzung vorhanden. Stoffmengenbezogene Anteile des zumindest einen zur Vernetzung befähigten Comonomers von mehr als 2,5 mol-% sind ebenfalls gut geeignet. Es ist sehr vorteilhaft, wenn die Zusammensetzung im Hinblick auf das zumindest eine zur Vernetzung befähigte Comonomer so ausgewählt wird, dass im Wesentlichen alle Copolymere zumindest einer Polymermode durch Einbau dieser Comonomersorte vernetzbar ausgerüstet werden. Bei dieser Polymermode kann es sich um jede vorkommende Polymermode handeln, bei bimodalen Systemen entsprechend um die Polymermode langkettiger Polymerketten oder Polymermode kurzkettiger Polymerketten. Besonders vorteilhaft ist es, alle Polymerketten vernetzbar auszurüsten.

Zur Vernetzung können alle dem Fachmann bekannten Verfahren und Reagenzien eingesetzt werden. Je nach Verfahren und/oder Reagenz wird dann als zumindest eine Sorte eines zur Vernetzung befähigten (Co)monomers eine solche ausgewählt, die eine entsprechend geeignete Funktionalität trägt. Als Vernetzungsverfahren sind thermische und/oder strahlenchemische Verfahren denkbar, die z.B. über UV oder Elektronenstrahlen initiiert werden. Zur Unterstützung dieser Vernetzungsverfahren können die nach dem Stand der Technik üblichen Hilfsstoffe wie Katalysatoren und/oder Initiatoren eingesetzt werden.

Als Photoinitiatoren für die UV-Vernetzung eignen sich bevorzugt Norrish-Typ I- und -Typ II-Spalter, wobei einige Beispiele für beide Klassen Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate sein können, wobei diese Aufzählung keinen Anspruch auf Vollständigkeit besitzt.

Sehr bevorzugt wird über chemische Vernetzer ein Netzwerk gebildet. Dazu wird der Klebmassenformulierung zumindest eine Sorte eines Vernetzers zugesetzt. Besonders geeignete Vernetzer gemäß dem erfinderischen Verfahren sind multifunktionelle, insbesondere bi-, tri- oder tetrafunktionelle Isocyanate oder multifunktionelle, insbesondere bi-, tri- oder tetrafunktionelle Epoxide. Eingesetzt werden können in sehr günstiger Weise ebenfalls Metall-Chelat-Verbindungen. Verwendet werden können aber auch alle weiteren, dem Fachmann geläufigen multifunktionellen, insbesondere bi-, tri- oder tetrafunktionellen Verbindungen, die in der Lage sind, insbesondere Polyacrylate zu vernetzen. Weiterhin können Silane, vor allem Trialkoxyorganosilane, die als Teil ihres organischen Rests optional eine reaktive Funktionalität tragen, zum Einsatz kommen.

Auch Kombinationen aus verschiedenen Vernetzungskonzepten und/oder Vernetzersubstanzen sind möglich.

Entsprechend können die multimodalen, insbesondere bimodalen (Co)polymere auch zwei oder mehr verschiedene Comonomersorten enthalten, die zu einer Vernetzung befähigt sind.

Für die Verwendung der nach dem erfindungsgemäßen Verfahren hergestellten multimodalen, insbesondere bimodalen (Co)polymere werden die (Co)polymere zur Optimierung optional mit zumindest einem Harz abgemischt. Als optional einsetzbare klebrigmachende Harze sind in Kombination mit den genannten multimodalen, insbesondere bimodalen (Co)polymeren ausnahmslos alle vorbekannten und in der Literatur beschriebenen Klebharze einsetzbar. Genannt seien stellvertretend die Kolophoniumharze, ihre disproportionierten, hydrierten, polymerisierten, veresterten Derivate und / oder Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. In vielen erfindungsgemäßen Verfahren wird der Zusatz von Klebharzen aber auf Grund ihrer die optische Qualität der Verklebungsschicht vermindernden Einflüsse nicht toleriert.

Als ebenfalls optional einsetzbare Weichmacher können alle aus der Selbstklebebandtechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebemassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

Auf Grund der kurzkettigen Polymermode in den multimodalen, insbesondere bimodalen Copolymeren kann häufig auf weiteren Zusatz von (migrierfähigen) Weichmachern komplett verzichtet oder deren Einsatzmenge reduziert werden, ohne durch sie eingebrachte positive Effekte auf das anwendungstechnische Leistungsprofil zu verlieren.

Hinsichtlich der Steuerung der Polymerisation zur Herstellung multimodaler, insbesondere bimodaler (Co)polymere durch die Zugabe zumindest einer Aminosäure als Regler in dem erfindungsgemäßen Verfahren sind verschiedene Möglichkeiten denkbar. Zwei vorteilhafte Möglichkeiten seien an dieser Stelle als Beispiel genannt. Der Fachmann ist in der Lage, auf Grundlage der vorliegenden Beschreibung weitere Polymerisationsfahrweisen zu konzipieren (wie zum Beispiel Dosiertechniken für Monomere und/oder Regler), die ebenfalls im Rahmen dieser Erfindung liegen.

In einem ersten beispielhaften Polymerisationsverfahren werden alle Monomere zu Beginn der Polymerisation vorgelegt. Der Anteil einer geregelten (kürzerkettigen) (Co)polymermode im Verhältnis zum Gesamtpolymerisat lässt sich mit Hilfe von zumindest einer Aminosäure als Reglersubstanz über ihren Zugabezeitpunkt steuern. Je früher der Regler dem Polymerisationsgemisch zugesetzt wird, desto höher ist der Anteil an kürzerkettigen (Co)polymermoleküle. Bevorzugt wird der Regler zwischen etwa 30 min und 2 h nach Polymerisationsbeginn zugesetzt. Andere Zeitpunkte nach Polymerisationsbeginn sind aber ebenfalls möglich.

Das Molekulargewicht der geregelten (kürzerkettigen) (Co)polymermode lässt sich in diesem ersten beispielhaften Polymerisationsverfahren über die Menge des eingesetzten Reglers steuern. Je höher die Menge des eingesetzten Reglers gewählt wird, desto geringer ist das resultierende Molekulargewicht der entsprechenden (Co)polymermode.

In einem zweiten beispielhaften Polymerisationsverfahren wird ein Teil der für die Polymerisation gewünschten Monomere erst zu einem Zeitpunkt nach Beginn der Polymerisation zugegeben. Der Regler wird dann vorteilhaft zum selben Zeitpunkt zugegeben, wie die angesprochene später zugegebene Monomermenge. Der Anteil geregelter (kürzerkettiger) (Co)polymere resultiert dann im Wesentlichen aus der Menge der zu diesem Zugabezeitpunkt vorhandenen Monomere. Das Molekulargewicht der geregelten (kürzerkettigen) (Co)polymere wird über das Verhältnis des / der eingesetzten Regler zu den zum Zugabezeitpunkt vorliegenden Monomermenge definiert.

Bimodale (Co)polymere resultieren, wenn lediglich eine Reglerzugabe erfolgt. Trimodale (Co)polymere werden durch Zugabe des Reglers / der Regler zu zwei verschiedenen Zeitpunkten nach Polymerisationsbeginn erhalten. Tetramodale (Co)polymere werden durch Zugabe des Reglers / der Regler zu drei verschiedenen Zeitpunkten nach Polymerisationsbeginn erhalten. Allgemein werden n-modale (Co)polymere durch Zugabe des Reglers / der Regler zu (n - 1) verschiedenen Zeitpunkten nach Polymerisationsbeginn erhalten.

Als besonders vorteilhaft für die Verwendung der erfindungsgemäßen Regler zur Herstellung multimodaler, insbesondere bimodaler (Co)polymere hat sich folgende Vorgehensweise, hier dargestellt für ein bimodales System, erwiesen:

Ein Monomergemisch wird in einem mit Lösungsmittel gefüllten Reaktor vorgelegt und bis zur Siedehitze aufgeheizt. Anschließend wird die Polymerisation durch Zugabe einer ersten Initiatormenge gestartet. Über die Monomerkonzentration und das Verhältnis zur Initiatormenge lässt sich die Molmassenverteilung, vor allem die mittlere Kettenlänge, der Polymere der langkettigen Polymermode einstellen. Nach einer vordefinierten Zeit wird das Reglersystem zugesetzt. Über Menge und Zeitpunkt lassen sich der Anteil und das Molekulargewicht einer kurzkettigen Polymermode einstellen. Je nach Bedarf werden während des Polymerisationsprozesses weitere Initiatorzugaben vorgenommen. Bevorzugt wird während des frühzeitigen Verlaufs der Polymerisation mit Initiatoren geringer Pfropfwirkung gearbeitet. Gegen Ende der Polymerisation bietet sich der Einsatz von Initiatoren mit hoher Pfropfwirkung an, so dass ein Polymerisat

mit geringem Restmonomergehalt erhalten wird.

Dieses Vorgehen zeichnet sich durch stabile Prozessbedingungen und eine vergleichsweise einfache Fahrweise aus. Es sind neben der Batchfahrweise aber auch Semibatchverfahren denkbar und Dosierstrategien zur kontrollierten Zugabe von einzelnen oder mehreren Monomeren und/oder Lösungsmitteln und/oder Reglersystemen anwendbar, ohne den Rahmen der vorliegenden Erfindung zu verlassen.

Als Initiatoren für die radikalische Polymerisation können alle für Acrylate oder andere Monomere bekannten üblichen Initiatoren eingesetzt werden. Die Produktion von C-zentrierten Radikalen ist im Houben Weyl, Methoden der Organischen Chemie, Vol. E 19a, S. 60 - 147, beschrieben. Diese Methoden können in Analogie angewendet werden. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-*tert*-butylperoxid, Azodiisosäurebutyronitril, Cyclohexylsulfonylacetylperoxid, Diisopropylpercarbonat, *tert*-Butylperoctoat, Benzpinacol. In einer sehr bevorzugten Variante werden die Initiatoren in mehreren Stufen hinzu gegeben, so dass der Umsatz auf über 90 % gesteigert wird. Der in dem Polymer verbleibende Restmonomergehalt kann so auf unter 10 Gew.-% abgesenkt werden.

Die Initiatoren können vorteilhaft vor oder zu Beginn der Polymerisation zu der Monomerlösung gegeben werden, es kann auch während der Polymerisation mit Initiatoren nachdosiert werden. Die Initiatoren werden bevorzugt zu einem Anteil von 0,001 bis 1 Gew.-%, bevorzugter von 0,025 bis 0,1 Gew.-%, bezogen auf das Monomerengemisch, in der Reaktionslösung, eingesetzt.

Die zur Initiierung der Polymerisation eingesetzten Initiatoren werden dabei bevorzugt derart gewählt, dass sie eine geringe Tendenz zur Ausbildung von Seitenketten in den Polymeren aufweisen, ihre Pfropfwirksamkeit liegt bevorzugt unter einem Wert von $\varepsilon < 5$ bei der Temperatur des Reaktionsgemisches bei Zugabe des Initiators. Gegen Ende der Polymerisation bietet sich eine Schlussinitiierung mit einem Initiator hoher Pfropfwirksamkeit an, um den Restmonomeranteil nahe an 0 % zu bringen oder sogar komplett zu eliminieren.

Als Lösungsmittel können im Zusammenhang mit dieser Erfindung prinzipiell alle dem Fachmann zur Durchführung von Polymerisationen geläufigen Lösungsmittel zur Anwendung kommen. Wasser ist dabei ebenso möglich wie organische Lösungsmittel, insbesondere aliphatische oder aromatische Kohlenwasserstoffe, Ester und Ether. Beispiele für organische Lösungsmittel, die sich gut eignen, sind Aceton, Benzin (Siedegrenzenbenzin), Ethylacetat, Methylethylketon, Toluol, Xylol, Butylacetat. Gemische sind ebenfalls denkbar. Bevorzugt wird das Lösungsmittel(gemisch) so ausgewählt, dass die Polymerisation unter Bedingung der Siedekühlung durchgeführt werden kann.

Polymerisationsverfahren im Sinne dieser Erfindung zur Herstellung multimodaler, insbesondere bimodaler (Co)polymere erlauben eine Reaktionsführung bei hohem Feststoffgehalt und auch einen ebenfalls hohen resultierenden Feststoffgehalt. Bevorzugt betragen die Feststoffgehalte am Ende der Polymerisation mindestens 45 Gew.-%, sehr bevorzugt mindestens 50 Gew.-%.

Die so erhaltenen Polymerlösungen eignen sich hervorragend als Bestandteile von Beschichtungsformulierungen für Klebemassen wie Haftklebemassen oder Heißsiegelmassen.

Bei der weiteren Verarbeitung entsprechender Klebemasseformulierungen basierend auf den erfindungsgemäßen multimodalen, insbesondere bimodalen (Co)polymeren lassen sich, entsprechend der hohen Ausgangsfeststoffgehalte, lösungsmittelhaltige Beschichtungsformulierungen von ebenfalls hohem Feststoffgehalt erhalten. Diese liegen bevorzugt bei mindestens 35 Gew.-%, sehr bevorzugt bei mindestens 45 Gew.-%.

Erfindungsgemäße Klebemasseformulierungen werden bevorzugt über einen Lösungsmittelbeschichtungsprozess auf eine Bahn beschichtet. Durch die Multimodalität und bedingt durch die Existenz kürzerkettiger Polymerketten resultiert bei hohem Feststoffgehalt eine im Vergleich zu monomodalen längerkettigen Polymeren eine geringere Lösungsviskosität. Daraus ergibt sich der Vorteil, erfindungsgemäße Klebemassenformulierungen bei höherem Feststoffgehalt mit Beschichtungsbildern von immer noch hoher optischer Qualität beschichten zu können. Es resultieren aus dem gesteigerten Feststoffgehalt weitere verfahrenstechnische Vorteile. So braucht im Lösungsmittelbeschichtungsprozess nur eine geringere Menge an Lösungsmittel abgezogen werden. Dies ermöglicht bei Einsatz des gleichen Trockners und der gleichen Trocknereinstellungen wie bei Beschichtungsformulierungen mit geringerem Feststoffgehalt eine Erhöhung der Bahngeschwindigkeit und damit eine Steigerung der Wirtschaftlichkeit.

Da die erfindungsgemäßen Haftklebemassen mit höherem Feststoffgehalt beschichtet werden können, resultiert auch eine geringere Beladung des Trockners mit Lösungsmittel. Es bietet sich daher die Möglichkeit, erfindungsgemäße Haftklebemasseformulierungen mit hohem Feststoffgehalt bei größerer Arbeitsbreite zu beschichten als es im Vergleich zu Beschichtungsformulierungen mit geringerem Feststoffgehalt und bei Einsatz des gleichen Trockners und gleicher Trocknereinstellungen möglich wäre. Auch dies führt zu einer Steigerung der Wirtschaftlichkeit des Prozesses.

Weiterhin sind erfindungsgemäße Klebemasseformulierungen mit hohem Feststoffgehalt von bevorzugt mindestens 35 Gew.-%, sehr bevorzugt von mindestens 40 Gew.-% vorzüglich geeignet, um hohe Klebemasseaufträge zu realisieren. Mit hohen Klebmassenaufträgen sind in diesem Zusammenhang solche zu verstehen, die nach Trocknung eine Schichtdicke von mindestens 75 μm aufweisen. Auch höhere Massenaufträge von mindestens 125 μm und sogar oberhalb 200 μm lassen sich mit einem Beschichtungsbild hervorragender optischer Qualität im Hinblick auf zum Beispiel

Masseverlauf und Blasenfreiheit beschichten. Ebenso lassen sich die Beschichtungsmassen ausgezeichnet trocknen, so dass Klebmasseschichten mit äußerst geringen Restlösemittelgehalten realisierbar sind. Dieses Ergebnis wird durch die Wahl geeigneter Lösungsmittel(gemische) noch unterstützt. Siehe hierzu z. B. die Schriften von Newman et al. [D. J. Newman, C. J. Nunn, J. K. Oliver, J. Paint. Technol., 1975, 47, 70-78; D. J. Newman, C. J. Nunn, Progr. Org. Coat., 1975, 3, 221-243]. Selbstverständlich sind auch dünnere Schichten sehr gut herstellbar. Auch auf sie treffen die gemachten Aussagen zur Beschichtungsqualität zu.

Zur Beschichtung können prinzipiell alle dem Fachmann bekannten Verfahren, insbesondere lösungsmittelbasierende Beschichtungsverfahren zur Anwendung kommen. Beispielhaft seien Walzen-, Rakel- und Düsenverfahren genannt.

Diese Ausführungen führen vor Augen, dass erfindungsgemäße multimodale, insbesondere bimodale (Co)polymere hervorragend als Haftklebmasseformulierungsbestandteile geeignet sind, die die Aufgabe lösen, nicht nur eine Balance in ihren anwendungstechnischen Eigenschaften (Adhäsion, Kohäsion), sondern auch eine verbesserte Prozessierbarkeit zu erreichen. Im Vergleich zu monomodalen Polymeren hohen Molekulargewichts, die bei sehr guter Kohäsion eine gute Adhäsion aufweisen, kann bei gleicher Lösungsviskosität mit multimodalen, insbesondere bimodalen Copolymeren bei höherem Feststoffgehalt gearbeitet werden, was zu Vorteilen im Hinblick auf die Herstelleffizienz und/oder erreichbare Schichtdicke und/oder Trocknungsgrad führt.

Über die erfindungsgemäßen Verfahren sind multimodale, insbesondere bimodale (Co)polymere zugänglich, die hervorragend in Haftklebemassen eingesetzt werden können. Diese können z.B. als zumindest eine Schicht in einseitig oder beidseitig haftklebrigen Produkten als Haftklebemasseschicht verwendet werden.

Einseitig haftklebrige Produkte enthalten zumindest eine Schicht einer Haftklebemassenformulierung enthaltend erfindungsgemäße multimodale, insbesondere bimodale (Co)polymere. Des Weiteren enthalten sie zumindest ein Trägermaterial, eine Folie, ein Gewebe, ein Gelege oder ein Papier. Das Trägermaterial kann weitere Schichten tragen oder chemisch und/oder physikalisch vorbehandelt sein. Insbesondere kann die zur Haftklebemasseschicht weisende Trägerseite mit einem haftungsverbessernden Vorstrich (Primer) ausgerüstet sein und/oder mittels physikalischer Verfahren wie Corona, Plasma oder Flamme behandelt worden sein. Die Trägerseite, die nicht zur Haftklebemasseschicht zeigt, kann mit einem trennend wirkenden Strich ausgerüstet sein, damit sich das Produkt zu Rollen aufwickeln und für die Anwendung wieder abrollen lässt. Alternativ kann die Haftklebemasseschicht aber auch durch einen Trennliner, ein Trennpapier oder eine Trennfolie eingedeckt sein, um die Haftklebmasseschicht bis zum Zeitpunkt der Verwendung gegen ungewolltes Verkleben oder Verschmutzen zu schützen.

Einseitig haftklebrige Produkte können als Selbstklebebänder, Selbstklebeetiketten oder Selbstklebefolien konfektioniert werden.

Doppelseitig haftklebrige Produkte enthalten zumindest eine Schicht einer Haftklebemassenformulierung enthaltend erfindungsgemäße multimodale, insbesondere bimodale Copolymere. Es handelt es sich bei ihnen vor allem um doppelseitige Selbstklebebänder oder -folien und bevorzugt um Transferklebebänder oder -folien. Transferklebebänder oder -folien enthalten zumindest eine Haftklebemasseschicht, doppelseitige Selbstklebebänder oder -folien zumindest zwei. Doppelseitige Selbstklebebänder und -folien enthalten zudem zumindest eine Lage eines Trägermaterials.

Um die haftklebrigen Oberflächen bis zum Anwendungszeitpunkt gegen Verschmutzung und ungewolltes vorzeitiges Verkleben zu schützen, werden sie typischerweise temporär mit wiederablösbaren Hilfsträgermaterialen, sogenannten Trennlinern, eingedeckt. Handelt es sich bei den doppelseitig haftklebrigen Produkten um Blattware, dann wird zur Eindeckung der Unterseite ein Blatt eines Trennlinermaterials verwendet und für die Oberseite ein zweites. Werden die doppelseitig haftklebrigen Produkte in Rollenform konfektioniert, dann können ebenfalls zwei Trennlinermaterialien zum Einsatz kommen oder auch eine einzige Bahn, die vorder- und rückseitig so vorbereitet ist, dass sie sich zum Zeitpunkt der Anwendung vom haftklebrigen Produkt zunächst von einer haftklebrigen Oberfläche und danach von der zweiten wieder ablösen lassen.

Der Aufbau der doppelseitig haftklebrigen Produkte umfasst eine erste und eine zweite Trennschicht sowie zumindest eine hierzwischen angeordnete erfindungsgemäße Haftklebemassenschicht. Handelt es sich bei den Trennschichten um Trennschichten unterschiedlicher Trennliner, so können die verwendeten Liner eine unterschiedliche Form und/oder Größe aufweisen. Zum Beispiel kann ein Trennliner in seinen Abmessungen die Haftklebemassenschicht und den anderen Trennliner überragen. Ebenfalls vorstellbar ist ein Produktaufbau, in dem die Trennliner die gleiche Form und/oder Größe aufweisen und die Haftklebemassenschicht in Form und/oder Größe überragen. In einer Ausführungsform kann das doppelseitig haftklebrige Produkt in Form entsprechend einer Etikettenbahn ausgebildet sein. So kann z.B. ein erster Trennliner bahnförmig ausgebildet sein, während die Haftklebemassenschicht in Form sich wiederholender z.B. durch Stanzen vereinzelter (ähnlich etikettenförmiger) Abschnitte hierauf aufgebracht ist. Der zweite Trennliner kann dann ebenfalls lediglich auf im Bereich der Haftklebemasse wiederkehrende Abschnitte beschränkt sein oder eine Form und/oder Größe aufweisen, die im Wesentlichen der Form und/oder Größe des ersten Trennliners entspricht. In letzterem Fall sind jedoch in einer vorteilhaften Ausführungsform im Bereich der Haftklebemasseflächen Stanzungen in dem zweiten Trennliner vorgesehen.

Kommen bei den haftklebrigen Produkten auf Basis multimodaler, insbesondere bimodaler (Co)polymere Träger zum Einsatz, dann können, ohne sich durch diese Aufzählung einschränken zu wollen, zur Herstellung dieser Trägerfolie alle filmbildenden und extrusionsfähigen Polymere eingesetzt werden. In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

In einer weiteren bevorzugten Auslegung dieser Erfindung werden Polyvinylacetate als Trägergrundstoffe eingesetzt. Polyvinylacetate können neben Vinylacetat auch Vinylalkohol als Comonomer enthalten, wobei der freie Alkoholanteil in weiten Grenzen variiert werden kann. In einer weiteren bevorzugten Auslegung dieser Erfindung werden Polyester als Trägerfolie eingesetzt. In einer besonders bevorzugten Auslegung dieser Erfindung werden Polyester auf Basis von Polyethylenterephthalat (PET) eingesetzt. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™ oder der Firma DuPont Teijin mit dem Handelsnamen Melinex™. Eine weitere sehr bevorzugte Spezies der Polyester stellen die Polybutylenterephthalat-Folien dar. Auch Polyethylennaphthalat (PEN) ist geeignet. In einer weiteren bevorzugten Auslegung dieser Erfindung werden Polyvinylchloride (PVC) als Folie eingesetzt. Zur Steigerung der Temperaturstabilität können die in diesen Folien enthaltenen Polymerbestandteile unter Verwendung versteifender Comonomere hergestellt werden. Weiterhin können die Folien im Zuge des erfinderischen Prozesses strahlenvernetzt werden, um eine ebensolche Eigenschaftsverbesserung zu erhalten. Kommt PVC als Folienrohstoff zum Einsatz, kann es optional plastifizierende Komponenten enthalten (Weichmacher). In einer weiteren bevorzugten Auslegung dieser Erfindung werden Polyamide zur Herstellung von Folien eingesetzt. Die Polyamide können aus einer Dicarbonsäure und einem Diamin oder aus mehreren Dicarbonsäuren und Diaminen bestehen. Neben Dicarbonsäuren und Diaminen lassen sich auch höher funktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. In einer weiteren bevorzugten Auslegung dieser Erfindung werden Polymethacrylate zur Herstellung von Folien eingesetzt. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur herab- oder heraufzusetzen oder die Ausbildung von kristallinen Segmenten zu minimieren. In einer weiteren bevorzugten Auslegung dieser Erfindung werden Polycarbonate zur Herstellung von Folien eingesetzt. Ferner können in einer weiteren Auslegung dieser Erfindung auf Vinylaromaten und Vinylheteroaromaten basierende Polymere und Copolymere zur Herstellung der Trägerfolie eingesetzt werden. Als Beispiel sei Polystyrol (PS) genannt. Weiterhin können Polyethersulfon- und Polysulfon-Filme als Trägermaterialien eingesetzt werden. Diese sind z.B. von der Firma BASF unter dem Handelsnamen Ultrason™ E und Ultrason™ S zu beziehen. Ferner können auch besonders bevorzugt hochtransparente TPU-Folien eingesetzt werden. Diese sind z.B. kommerziell erhältlich von der Firma Elastogran GmbH. Es können auch hochtransparente Folien auf Basis von Polyvinylalkohol und Polyvinylbutyral verwendet werden.

Zur Herstellung eines folienförmigen Materials kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Neben einschichtigen Folien können auch mehrschichtige Folien verwendet werden, die z.B. coextrudiert hergestellt werden. Hierfür können die zuvor genannten Polymermaterialien miteinander kombiniert werden.

Ferner können die Folien behandelt sein. So können z.B. Bedampfungen oder Besputterungen vorgenommen sein, beispielsweise mit Aluminium, Zinkoxid, $SiO_x$ oder Indium-Zinn-Oxid, oder es können Lacke oder Haftvermittler aufgetragen sein. Eine weitere mögliche Additivierung stellen UV-Schutzmittel dar, die als Additive in der Folie vorliegen können oder als Schutzschicht aufgebracht sein können.

Die Trägerfolie kann beispielsweise auch eine optische Beschichtung aufweisen. Als optische Beschichtung eignen sich insbesondere Beschichtungen, die die Reflexion verringern. Dies wird beispielsweise durch eine Absenkung der Brechungsindexdifferenz für den Übergang Luft / optische Beschichtung erreicht.

Kommen bei den haftklebrigen Produkten auf Basis multimodaler, insbesondere bimodaler (Co)polymere Trennliner zum Einsatz, dann können diese einseitig oder beidseitig trennend ausgerüstet sein. Zur Herstellung einseitiger oder beidseitiger Trennliner können prinzipiell ebenfalls alle filmbildenden und extrusionsfähigen Polymere eingesetzt werden, die bevorzugt einseitig oder beidseitig mit Trennsystemen ausgestattet sind. Beispiele sind in den Zusammenstellungen von Satas, Kinning und Jones, die an dieser Stelle zitiert seien, zu finden [D. Satas in "Handbook of Pressure Sensitive Adhesives Technology", D. Satas (ed.), 3. Aufl., 1999, Satas & Associates, Warwick, S. 632 - 651; D. J. Kinning, H. M. Schneider in "Adhesion Science and Engineering - Band 2: Surfaces, Chemistry & Applications", M. Chaudhury, A. V. Pocius (Hrsg.), 2002, Elsevier, Amsterdam, S. 535 - 571; D. Jones, Y. A. Peters in "Handbook of Pressure Sensitive Adhesives Technology", D. Satas (ed.), 3. Aufl., 1999, Satas & Associates, Warwick, S. 652 - 683].

Trennliner bestehen typischerweise aus einer Trägerfolie, die ein- oder beidseitig mit einem Trennlack, der

bevorzugt auf Silikon basiert, ausgestattet ist. In einer bevorzugten Auslegung dieser Erfindung werden als Trägermaterial für die Trennliner Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit. In einer besonders bevorzugten Ausführungsform dieser Erfindung werden Polyester auf Basis von Polyethylenterephthalat (PET) als Trägermaterial für die Trennliner eingesetzt. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™ oder der Firma DuPont Teijin mit dem Handelsnamen Melinex™.

Weiterhin kommen diverse Papiere, optional auch in Kombination mit einer stabilisierenden Extrusionsbeschichtung, als Trägermaterial für Trennliner in Frage. Alle genannten Trennliner erhalten durch einen oder mehrere Beschichtungsgänge beispielsweise aber bevorzugt mit einem Silikon-basierenden Release ihre antiadhäsiven Eigenschaften. Der Auftrag kann dabei ein- oder beidseitig erfolgen.

Trennliner können zudem eine Fluoro-Silikonisierung als Trennmittel tragen. Neben Fluoro-Silikonsystem kommen auch Beschichtungen aus fluorierten Kohlenwasserstoffen auf Trennlinern in Betracht.

Alle dem Fachmann geläufigen Konzepte zur Einstellung der Trenneigenschaften der Trennschichten sind im Sinne dieser Erfindung prinzipiell einsetzbar. Zusammenstellungen von Steuermöglichkeiten stellen Satas, Kinning und Jones zusammen [D. Satas in "Handbook of Pressure Sensitive Adhesives Technology", D. Satas (ed.), 3. Aufl., 1999, Satas & Associates, Warwick, S. 632 - 651; D. J. Kinning, H. M. Schneider in "Adhesion Science and Engineering - Band 2: Surfaces, Chemistry & Applications", M. Chaudhury, A. V. Pocius (Hrsg.), 2002, Elsevier, Amsterdam, S. 535 - 571; D. Jones, Y. A. Peters in "Handbook of Pressure Sensitive Adhesives Technology", D. Satas (ed.), 3. Aufl., 1999, Satas & Associates, Warwick, S. 652 - 683]. Dies ist wichtig bei beidseitigen Trennlinern oder bei Produktdesigns mit zwei Trennlinern. Für eine gute Handhabbarkeit müssen die Trennkräfte der beiden Trennschichten abgestuft sein.

Die Masseaufträge der einen oder mehreren Haftklebemasseschichten kann bzw. können unabhängig voneinander gewählt werden. Sie liegen zwischen 1 $g/m^2$ und 1000 $g/m^2$, insbesondere zwischen 10 $g/m^2$ und 500 $g/m^2$, sehr bevorzugt zwischen 20 $g/m^2$ und 300 $g/m^2$.

Kommen mehr als eine Haftklebemasseschicht zum Einsatz, können die Schichten gleicher oder unterschiedlicher Art im Hinblick auf Chemie, Formulierung und/oder Vernetzungszustand sein. Auch trägerfreie Varianten können zwei oder mehr Haftklebeschichten enthalten.

Kommt in den doppelseitig haftklebrigen Produkten ein Träger zum Einsatz, dann beträgt die Foliendicke in einer bevorzugten Auslegung zwischen 4 $\mu$m und 200 $\mu$m, besonders bevorzugt zwischen 12 $\mu$m und 100 $\mu$m. Es können mehr als eine Trägerfolie zum Einsatz kommen, die unabhängig voneinander im Hinblick auf Rohstoffklasse, Formulierung, chemische Eigenschaften, physikalische Eigenschaften, Oberflächenbehandlung und/oder Dicke ausgewählt werden können. Kommen mehrere Trägerlagen zum Einsatz, dann können sie durch weitere Haftklebeschichten oder auch andere Klebschichten wie Heiß- oder Kaltsiegelschichten miteinander verbunden sein.

Doppelseitig mit Trennschichten ausgerüstete Trennliner weisen bevorzugt eine Dicke von mindestens 20 $\mu$m auf und von weniger als 150 $\mu$m. Für einseitig mit Trennschicht ausgestattete Trennliner wird derselbe Wertebereich bevorzugt.

Kommen Trennlinerkombinationen zum Einsatz, dann können die Dicken eines ersten Trennliners und eines zweiten Trennliners gleich oder verschieden sein. Geeignete Trennlinerdicken liegen wiederum zwischen 20 $\mu$m und 150 $\mu$m. Besonders vorteilhafte Trennlinerdickenkombinationen bestehen aus Trennlinern mit Dicken im Bereich von jeweils 30 $\mu$m bis 80 $\mu$m. Besonders vorteilhafte Trennlinerdickenkombinationen sind 36 $\mu$m (Dicke des ersten Trennliners) und 50 $\mu$m (Dicke des zweiten Trennliners) bzw. umgekehrt sowie 50 $\mu$m und 75 $\mu$m bzw. umgekehrt.

Haftklebemassen auf Basis erfindungsgemäßer multimodaler, insbesondere bimodaler (Co)polymere erlauben es, haftklebrige Produkte mit sehr vorteilhafter Kombination aus adhäsiven und kohäsiven Eigenschaften zur Verfügung zu stellen (siehe Beispiele). Dies liegt an einer besonderen viskoelastischen Charakteristik. Erfindungsgemäße Haftklebemassen lassen sich durch geeignete Vernetzung so einstellen, dass sie einerseits partiell "hart" (sie weisen einen enormen elastischen Anteil auf) und gleichzeitig partiell "weich" (sie weisen eine hohe Klebkraft auf) sind. Der elastische Anteil kann bei über 85 % liegen, ohne die Klebkraft zu beeinträchtigen. Diese liegt auch bei einem sehr hohen elastischen Anteil von über 85 % auf höherem Niveau als bei einer Haftklebemasse basierend auf monomodalen Polymeren mit hohem Molekulargewicht. Es sind entsprechend der Lehre dieser Erfindung haftklebrige Produkte zugänglich, die sich, auf Grund ihrer "harten" Anteile im viskoelastischen Profil, sehr gut stanzen lassen. Solche gut stanzbaren Designs zeichnen sich auch durch eine äußerst geringe Neigung zum Klebmasseausbluten („Oozing") an den Schnitt-/Stanzkanten aus. Die gute Stanzbarkeit zeigt sich in rotativen Stanzprozessen aber auch beim Flachbettstanzen. Obwohl entsprechende Haftklebemassen partiell "hart" sind, was ihre Eignung im Stanzprozess bewirkt, sind sie gleichzeitig sehr gut in Laminierprozessen einsetzbar. Dies resultiert aus "weichen" Anteilen im viskoelastischen Profil. Diese "Weichheit" sorgt für ein gutes Auffließen der Haftklebeschicht auf das zu laminierende Substrat.

Auf Grund ihrer besonderen anwendungstechnischen Eigenschaftsbalance und ausgezeichneten Beschichtbarkeit mit hochqualitativem Strichbild, eignen sich erfindungsgemäße multimodale, insbesondere bimodale (Co)polymere hervorragend für doppelseitig haftklebrige Produkte, insbesondere Transferklebebänder für qualitativ hochwertige optische Verklebungen, was hier als eine Beispielanwendung erwähnt sei. Die Haftklebemasse wird dazu als Reinacrylat konzipiert, d. h. ihr werden keine Klebharze zugesetzt, um eine optimal wasserklare und farblose Klebschicht zu erhalten. Der multimodale, insbesondere bimodale Charakter führt dann bei sehr guter Kohäsion zu erhöhten Klebkräften.

Aus erfindungsgemäßen multimodalen, insbesondere bimodalen (Co)polymeren lassen sich damit attraktive Haftklebemassen formulieren, deren Einsatz in (insbesondere doppelseitig) haftklebrigen Produkten zu sehr gut handhabbaren und stanzbaren Laminierbändern und -folien führt. Die Erfindung schafft also haftklebrige Produkte auf Basis von Haftklebemassen, die eine anwendungstechnisch günstige Balance aus adhäsiven und kohäsiven Eigenschaften mit einer sehr guten Prozessierbarkeit verknüpft und so eine attraktive Lösung der gestellten Aufgabe darstellt.

*Prüfmethoden*

Testmethode A - GPC:

Die Bestimmung der Molekulargewichtsverteilung und damit zusammenhängend das Zahlenmittel der Molekulargewichtsverteilung $M_N$, das Gewichtsmittel der Molekulargewichtsverteilung $M_W$ und das Maximum bei monomodalen bzw. die Maxima der Molekulargewichtsverteilung bei bi- oder multimodalen Copolymeren $M_P$ erfolgte durch Gelpermeationschromatographie (GPC). Als Eluent wurde THF mit 0,1 Vol.-% Trifluoressigsaure eingesetzt. Die Messung erfolgte bei 23°C. Als Vorsäule wurde PSS SDV, 10 μ, 103 A, ID 8.0 mm x 50 mm verwendet. Zur Auftrennung wurde die Säulenkombination PSS-SDV, 10 μ, Linear-one mit ID 8.0 mm x 300 mm eingesetzt. Die Probenkonzentration betrug 1 g/l, die Durchflussmenge 0,5 ml pro Minute. Es wurde gegen Polystyrol-Standards gemessen. $M_P$-Werte wurden graphisch aus den Elugrammen ermittelt. Zur Datenverarbeitung wurde die Software WinGPC Unity Version 7.20 der Fa. PSS verwendet.

Testmethode B - Klebkraft:

Zur Bestimmung der Klebkraft (Schälfestigkeit) wird in Anlehnung an PSTC-1 wie folgt vorgegangen: Auf eine 25 μm dicke PET-Folie wird eine 50 μm dicke Haftklebeschicht aufgebracht. Ein 2 cm breiter Streifen dieses Musters wird auf eine geschliffene Stahlplatte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Die Ergebnisse werden in N/cm angegeben.

Testmethode C - Mikroscherweg:

In Anlehnung an ASTM D 4498 wird wie folgt vorgegangen: Ein 50 μm dickes Muster eines Transferklebebands wird von den Trennlinern befreit und einseitig mit einer 50 μm dicken Aluminiumfolie zur Stabilisierung ausgerüstet. Ein Prüfstreifen von 10 mm Breite und ca. 50 mm Länge wird so auf eine Stahlplatte geklebt, dass eine Verklebungsfläche von 130 $mm^2$ resultiert. Die Verklebung wird durch dreimaliges Hin- und Herrollen eines 2 kg Gewichts erzeugt. Die Stahlplatte wird in der Messapparatur justiert, so dass der Prüfstreifen in vertikaler Position vorliegt und auf 30 °C temperiert. Das System wird auf 40 °C aufgeheizt. Mittels einer Schelle (6,4 g Eigengewicht) wird am freien Ende des Teststreifens ein Gewicht von 500 g befestigt, das die Probe durch Gravitation scherend belastet. Auf ein kurzes über die Stahlplatte überstehendes Stück des Testklebestreifens wird ein Mikrometertaster aufgelegt, der die Auslenkung in Abhängigkeit der Messzeit registriert. Ergebnis für den Mikroscherweg ist der nach einer Messzeit von 60 min registrierte Wert. Zudem wird die Elastizität aufgenommen, indem nach der Scherbeanspruchung das Gewicht abgehängt wird und die Relaxation des Klebestreifens verfolgt wird. Nach weiteren 60 min wird der Wert des Mikrometertasters aufgenommen und in das prozentuale Verhältnis mit dem Mikroscherweg unter Belastung gesetzt. Ein hoher Prozentwert indiziert eine hohe Elastizität entsprechend einem hohen Rückstellvermögen der Probe.

Testmethode D - Farbwert b*:

Es wurde gemäß DIN 6174 vorgegangen und die Farbcharakteristik im dreidimensionalen Raum, aufgespannt durch die drei Farbparameter L*, a* und b*, nach CIELab untersucht. Dazu wurde ein BYK Gardener spectro-guide Messgerät verwendet, ausgestattet mit einer D/65° Lampe. Innerhalb des CIELab-Systems gibt L* den Grauwert, a* die Farbachse von grün nach rot und b* die Farbachse von blau nach gelb an. Der positive Wertebereich für b* gibt die Intensität des gelben Farbanteil an. Als Referenz diente eine weiße Keramikfliese mit einem b* von 1,05. Diese Fliese diente zudem als Probenhalter, auf den die zu prüfende Klebschicht auflaminiert wird. Die Farbmessung erfolgt an der

jeweiligen reinen Klebschicht, nachdem diese von den Trennlinern befreit worden ist.

Testmethode E - Umsatzkontrolle:

Zur Verfolgung des Umsatzes wird der Reaktionsfortschritt bezogen auf die ungesättigten C=C-Doppelbindungen der bereitgestellten Monomere bzw. Monomergemische inline mittels einer NIR (Nahinfrarot) Sonde verfolgt, die über einen Lichtleiter mit einem NIR-Spektrometer verbunden ist. Bei der Sonde handelt es sich um eine Bruker NIR Tauchsonde "Quarz Lang" XN035-x mit einer optischen Weglänge von 10 mm, bei dem Spektrometer um ein Bruker FT-NIR Spektrometer IFS 28/N. Die Messzeit pro Spektrum entsprechend einem Messpunkt für die Umsatzkontrolle beträgt 4,4 s. Aufgezeichnet wird ein Wellenzahlenbereich zwischen 12000 1/cm und 4000 1/cm. Für die Umsatzkontrolle wird im Falle von Acrylat-Monomeren die durch die erste Obertonschwingung der vinylischen C-H-Bindung bei 6160 1/cm hervorgerufene IR-Extinktion, die charakteristisch für diese Monomere ist und im Laufe der Polymerisation mit Verbrauch der Monomere abnimmt, verwendet. Im Falle anderer Monomere bzw. Monomergemische wird die korrespondierende durch die erste Obertonschwingung der entsprechenden vinylischen C-H-Bindung hervorgerufene IR-Extinktion verfolgt. Die Extinktion bei 6160 1/cm im Falle von Acrylatmonomeren bzw. bei der korrespondierenden Wellenzahl im Falle anderer Monomere vor erster Initiierung durch eine erste Zugabe eines Initiators dient als Startwert und entspricht dem Wert für einen Umsatz von 0 %. Eine Extinktion, die sich nicht mehr von der Basislinie bei der betrachteten Wellenzahl unterscheidet entspricht einem Umsatz von 100 %.

*Beispiele*

Beispiel 1:

In einem für die radikalische Polymerisation konventionellen 2L-Stahlreaktor wird unter Stickstoffatmosphäre 285 g 2-Ethylhexylacrylat, 285 g n-Butylacrylat, 6 g 2-Hydroxyethylmethacrylat und 500 g Ethylacetat vorgelegt. Der Reaktor wird auf 70 °C Innentemperatur aufgeheizt und das Monomergemisch mit 0,6 g Dibenzoylperoxid initiiert. Nach 1 Stunde 30 Minuten wird mit 0,3 g Benzoylperoxid nachinitiiert. Die Temperatur beträgt zu diesem Zeitpunkt 85 °C. Nach weiteren 30 min werden 35 g einer 3 %igen Aceton/Ethylacetat-Lösung (1:1) an Acetylcystein (ACC) als erfindungsgemäßem Regler sowie weitere 6 g 2-Hydroxymethylacrylat zugegeben. Dieser Zeitpunkt entspricht einem Umsatz der eingesetzten Monomere bezogen auf die C=C-Doppelbindungen (Messmethode E) von 72 %. Nach weiteren Verdünnungen und Endinitiierungen wird nach 21 Stunden und 30 min auf 40 °C abgekühlt und das wasserklare Polymerisat abgelassen.
Eine Probe des Produkts wird im Vakuumtrockenschrank vom Lösungsmittel befreit. Die GPC-Analyse (Test A) ergab eine bimodale Molekulargewichtsverteilung mit $M_P$(kurz) = 31.000 g/mol und $M_P$(lang) = 850.000 g/mol. Der Anteil der langkettigen Copolymere lag bei 78 %, der der kurzkettigen bei 22 %.
Eine weitere Probe der Polymerisationslösung wird mit 0,6 % Desmodur L75 vernetzt, mittels Rakel auf eine 50 μm dicke silikonisierte Polyesterfolie ausgestrichen und im Trockenschrank getrocknet. Die Schichtdicke der Haftklebeschicht lag bei 50 μm. Sie wird mit einer Lage eines 36 μm dicken silikonisierten Polyesterliners eingedeckt. Es wurde so eine Transferklebefolie erhalten. Entsprechend dimensionierte Streifen werden Testmethode B und C unterworfen. Es ergaben sich eine Klebkraft von 3,1 N/cm, ein Mikroscherweg von 437 μm und ein elastischer Anteil von 97 %.
Eine Farbmessung nach Testmethode D ergab einen b*-Wert von 1,15. Von den Mustern ging kein Geruch aus.

Beispiel 2 (Referenz):

In einem für die radikalische Polymerisation konventionellen 2L-Stahlreaktor wird unter Stickstoffatmosphäre 285 g 2-Ethylhexylacrylat, 285 g n-Butylacrylat, 6 g 2-Hydroxyethylmethacrylat und 500 g Ethylacetat vorgelegt. Der Reaktor wird auf 70 °C Innentemperatur aufgeheizt und das Monomergemisch mit 0,6 mg Dibenzoylperoxid initiiert. Nach 1 Stunde 30 Minuten wird mit 0,3 g Benzoylperoxid nachinitiiert. Die Temperatur betrug zu diesem Zeitpunkt 85 °C. Nach weiteren 30 min werden 120 g iso-Propanol als Regler sowie weitere 6 g 2-Hydroxymethylacrylat zugegeben. Dieser Zeitpunkt entspricht einem Umsatz für die eingesetzten Monomere bezogen auf die C=C-Doppelbindungen (Messmethode E) von 69 %. Nach weiteren Verdünnungen und Endinitiierungen wird nach 21 Stunden und 30 min auf 40 °C abgekühlt und das wasserklare Polymerisat abgelassen.
Eine Probe des Produkts wird im Vakuumtrockenschrank vom Lösungsmittel befreit. Die GPC-Analyse (Test A) ergab eine bimodale Molekulargewichtsverteilung mit $M_P$(kurz) = 30.000 g/mol und $M_P$(lang) = 800.000 g/mol. Der Anteil der langkettigen Copolymere lag bei 74 %, der der kurzkettigen bei 26 %.
Eine weitere Probe der Polymerisationslösung wird mit 0,6 % Desmodur L75 vernetzt, mittels Rakel auf eine 50 μm dicke silikonisierte Polyesterfolie ausgestrichen und im Trockenschrank getrocknet. Die Schichtdicke der Haftklebeschicht lag bei 50 μm. Sie wird mit einer Lage eines 36 μm dicken silikonisierten Polyesterliners eingedeckt. Es

wurde so eine Transferklebefolie erhalten. Beim Versuch, Muster für die klebtechnische Ausprüfung zu präparieren, traten Schwierigkeiten bei der Ausdeckung des ersten Trennliners auf. Die Haftklebeschicht wies keine ausreichende Kohäsion für Untersuchungen nach Testmethoden B und C auf, so dass diese Probe nicht weiter untersucht wurde.

- Tabelle 1 -

| | Beispiel 1 (Erfindung) | Beispiel 2 (Referenz) |
|---|---|---|
| Typ | bimodales Polymer | bimodales Polymer |
| MP(lang) | 850.000 g/mol | 800.000 g/mol |
| MP(kurz) | 31.000 g/mol | 30.000 g/mol |
| Anteil (lang) | 78 % | 74 % |
| Anteil (kurz) | 22 % | 26 % |
| Reglertyp | Acetylcystein | iso-Propanol |
| Vernetzer | 0,6 % L75 | 0,6 % L75 |
| Klebkraft (Stahl) | 3,1 N/cm | nicht bestimmt |
| Mikroscherweg (40 °C, 500 g) | 437 μm, 97 % elastischer Anteil | nicht bestimmt |
| b*-Wert | 1,15 | nicht bestimmt |
| Geruch | keiner | nicht bestimmt |

Tabelle 1 fasst die Ergebnisse der Beispiele zusammen. Es ist erkennbar, dass mittels unterschiedlicher Regler ähnliche Ergebnisse im Hinblick auf die Molekulargewichtsverteilung, insbesondere im Hinblick auf die Modalität erreicht werden können. Jedoch zeigen sich die Unterschiede der verschiedenen Reglersysteme in der Weiterverarbeitbarkeit der Polymerisate (Beispiel 2). Ein Erklärungsansatz hierfür besteht darin, dass die erfindungsgemäß als Reglersubstanz verwendeten Aminosäuren eine besonders hohe Kettenübertragungskonstante aufweisen. Dies erlaubt den Einsatz einer weitaus geringeren Menge an erforderlicher Reglersubstanz im Vergleich zu bekannten Reglern wie beispielsweise iso-Propanol. Das in Beispiel 2 in großer Menge eingesetzte iso-Propanol ist dabei offenkundig für die negative Auswirkung auf die anwendungstechnischen Eigenschaften verantwortlich. Die Beispiele belegen ferner, dass das erfindungsgemäße Verfahren die Bereitstellung von (Co)polymeren ermöglicht, die aufgrund ihrer Farbcharakteristik in optisch hochwertigen Verklebungsanwendungen einsetzbar sind.

**Patentansprüche**

**1.** Radikalisches (Co)polymerisationsverfahren umfassend die folgenden Schritte:

(a) das Bereitstellen eines Monomers bzw. eines Monomergemisches mit ungesättigten C=C-Doppelbindungen;
(b) das Starten der radikalischen (Co)polymerisation durch eine erste Zugabe eines Initiators; sowie anschließend
(c) die Zugabe zumindest einer Aminosäure als Reglersubstanz,

wobei die Zugabe der Reglersubstanz nach Erreichen eines Umsatzes von 50 % bezogen auf die ungesättigten C=C-Doppelbindungen des in Schritt (a) bereitgestellten Monomers bzw. Monomergemisches erfolgt.

**2.** Verfahren gemäß Anspruch 1, worin die Zugabe der Reglersubstanz bis zum Erreichen eines Umsatzes von 95 % bezogen auf die ungesättigten C=C-Doppelbindungen des in Schritt (a) bereitgestellten Monomers bzw. Monomergemisches erfolgt:

**3.** Verfahren gemäß Anspruch 1 oder 2, worin die Aminosäure in Schritt (c) in einer Menge von 0.05 bis 5 mol-% bezogen auf das in Schritt (a) bereitgestellte Monomer bzw. Monomergemisch zugegeben wird.

**4.** Verfahren gemäß einem der vorhergehenden Ansprüche, worin die Aminosäure ausgewählt ist aus der Gruppe bestehend aus thiol-, selanyl- und hydroxygruppenhaltigen Aminosäuren.

5. Verfahren gemäß Anspruch 4, worin die Aminosäure eine endständige Thiol-, Selanyl- und/oder Hydroxygruppe aufweist.

6. Verfahren gemäß Anspruch 4 oder 5, worin die Aminosäure N-Acetylcystein ist.

7. Verfahren gemäß einem der vorhergehenden Ansprüche, worin das Monomergemisch wenigstens einen Acryl- und/oder Methacrylsäureester umfasst.

8. Verfahren gemäß einem der vorhergehenden Ansprüche, worin das Monomergemisch zumindest 70 Gew.-% wenigstens eines Acryl- und/oder Methacrylsäureesters umfasst.

9. (Co)polymer erhältlich nach dem Verfahren gemäß einem der Ansprüche 1 bis 8.

10. (Co)polymer gemäß Anspruch 9, worin das (Co)polymer ein (Meth)acrylatcopolymer ist, das zumindest eine kurzkettige sowie eine langkettige Polymermode (a) bzw. (b) aufweist:

    (a) eine kurzkettige Polymermode mit einem Molekulargewicht $M_P$(kurz) von mindestens 5.000 g/mol und höchstens 100.000 g/mol, sowie
    (b) eine langkettige Polymermode mit einem Molekulargewicht $M_P$(lang) von mindestens 500.000 g/mol und höchstens 3.000.000 g/mol.

11. (Co)polymer gemäß Anspruch 10, umfassend wenigstens 50 Gew.-% der langkettigen Polymermode (b) bezogen auf die Gesamtmenge der kurz- und langkettigen Polymermoden (a) und (b).

12. Haftklebemasse, umfassend das (Co)polymer gemäß einem der Ansprüche 9 bis 11.

13. Haftklebriges Produkt, umfassend die Haftklebemasse gemäß Anspruch 12.

## Claims

1. Radical (co)polymerization process comprising the following steps:

    (a)providing a monomer or monomer mixture with unsaturated C=C double bonds;
    (b) starting the radical (co)polymerization by a first addition of an initiator; and subsequently (c)adding at least one amino acid as chain transfer substance,

    the addition of the chain transfer substance taking place after attainment of a conversion of 50%, based on the unsaturated C=C double bonds of the monomer or monomer mixture provided in step (a).

2. Process according to Claim 1, wherein the addition of the chain transfer substance takes place until attainment of a conversion of 95%, based on the unsaturated C=C double bonds of the monomer or monomer mixture provided in step (a).

3. Process according to Claim 1 or 2, wherein the amino acid is added in step (c) in an amount of 0.05 to 5 mol%, based on the monomer or monomer mixture provided in step (a).

4. Process according to any of the preceding claims, wherein the amino acid is selected from the group consisting of amino acids containing thiol, selanyl, and hydroxyl groups.

5. Process according to Claim 4, wherein the amino acid has a terminal thiol, selanyl and/or hydroxyl group.

6. Process according to Claim 4 or 5, wherein the amino acid is N-acetylcysteine.

7. Process according to any of the preceding claims, wherein the monomer mixture comprises at least one acrylic and/or methacrylic ester.

8. Process according to any of the preceding claims, wherein the monomer mixture comprises at least 70% by weight

of at least one acrylic and/or methacrylic ester.

**9.** (Co)polymer obtainable by process according to any of Claims 1 to 8.

**10.** (Co)polymer according to Claim 9, wherein the (co)polymer is a (meth)acrylate copolymer which has at least one short-chain and one long-chain polymer mode (a) and (b):

(a) a short-chain polymer mode having a molecular weight $M_P$ (short) of at least 5000 g/mol and not more than 100 000 g/mol, and
(b) a long-chain polymer mode having a molecular weight $M_P$ (long) of at least 500 000 g/mol and not more than 3 000 000 g/mol.

**11.** (Co)polymer according to Claim 10, comprising at least 50% by weight of the long-chain polymer mode (b), based on the total amount of the short- and long-chain polymer modes (a) and (b).

**12.** Pressure-sensitive adhesive comprising the (co)polymer according to any of Claims 9 to 11.

**13.** Pressure-sensitive adhesive product comprising the pressure-sensitive adhesive according to Claim 12.

## Revendications

**1.** Procédé de (co)polymérisation par voie radicalaire comprenant les étapes suivantes :

(a) mise à disposition d'un monomère ou d'un mélange de monomères présentant des doubles liaisons insaturées C=C ;
(b) initiation de la (co)polymérisation par voie radicalaire par une première addition d'un initiateur ; ainsi qu'ensuite
(c) addition d'au moins un aminoacide comme substance de régulation,

l'addition de la substance de régulation ayant lieu après avoir atteint une conversion de 50% par rapport aux doubles liaisons insaturées C=C du monomère ou du mélange de monomères mis à disposition dans l'étape (a).

**2.** Procédé selon la revendication 1, l'addition de la substance de régulation ayant lieu jusqu'avoir atteint une conversion de 95% par rapport aux doubles liaisons insaturées C=C du monomère ou du mélange de monomères mis à disposition dans l'étape (a).

**3.** Procédé selon la revendication 1 ou 2, l'aminoacide dans l'étape (c) étant ajouté en une quantité de 0,05 à 5% en mole par rapport au monomère ou mélange de monomères mis à disposition dans l'étape (a).

**4.** Procédé selon l'une quelconque des revendications précédentes, l'aminoacide étant choisi dans le groupe constitué par les aminoacides contenant des groupes thiol, sélanyle et hydroxy.

**5.** Procédé selon la revendication 4, l'aminoacide présentant un groupe thiol, sélanyle et/ou hydroxy en position d'extrémité.

**6.** Procédé selon la revendication 4 ou 5, l'aminoacide étant la N-acétylcystéine.

**7.** Procédé selon l'une quelconque des revendications précédentes, le mélange de monomères comprenant au moins un ester de l'acide acrylique et/ou méthacrylique.

**8.** Procédé selon l'une quelconque des revendications précédentes, le mélange de monomères comprenant au moins 70% en poids d'au moins un ester de l'acide acrylique et/ou méthacrylique.

**9.** (Co)polymère pouvant être obtenu selon le procédé selon l'une quelconque des revendications 1 à 8.

**10.** (Co)polymère selon la revendication 9, dans lequel le (co)polymère est un copolymère de (méth)acrylate, qui présente au moins un mode de polymère à courte chaîne ainsi qu'un mode de polymère à longue chaîne respectivement

(a) ou (b) :

(a) un mode de polymère à courte chaîne présentant un poids moléculaire Mp(court) d'au moins 5000 g/mole et d'au plus 100 000 g/mole, ainsi que
(b) un mode de polymère à longue chaîne présentant un poids moléculaire Mp(long) d'au moins 500 000 g/mole et d'au plus 3 000 000 g/mole.

**11.** (Co)polymère selon la revendication 10, comprenant au moins 50% en poids du mode de polymère à longue chaîne (b) par rapport à la quantité totale des modes de polymère à courte et à longue chaîne (a) et (b).

**12.** Masse autoadhésive comprenant le (co)polymère selon l'une quelconque des revendications 9 à 11.

**13.** Produit autoadhésif comprenant la masse autoadhésive selon la revendication 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004056884 A
- EP 1882707 A


### In der Beschreibung aufgeführte Nicht-Patentliteratur


- **A. I. EVERAERTS ; L. M. CLEMENS.** Adhesion Science & Engineering. Elsevier, 2002, vol. 2, 485-505
- **A. ZOSEL et al.** Handbook of Pressure Sensitive Adhesives Technology. Satas & Associates, 1999, 444-549
- **D. SATAS et al.** Handbook of Pressure Sensitive Adhesives Technology. Satas & Associates, 1999, 455f, 485
- **H.-G. ELIAS.** Makromoleküle. Wiley-VCH, 1999, vol. 1, 334-340
- **T.G. FOX.** *Bull. Am. Phys. Soc.,* 1956, vol. 1, 123ff
- **HOUBEN WEYL.** Methoden der Organischen Chemie. vol. E 19a, 60-147
- **D. J. NEWMAN ; C. J. NUNN ; J. K. OLIVER.** *J. Paint. Technol.,* 1975, vol. 47, 70-78
- **D. J. NEWMAN ; C. J. NUNN.** *Progr. Org. Coat.,* 1975, vol. 3, 221-243
- **D. SATAS.** Handbook of Pressure Sensitive Adhesives Technology. Satas & Associates, 1999, 632-651
- **D. J. KINNING ; H. M. SCHNEIDER.** Adhesion Science and Engineering - Band 2: Surfaces, Chemistry & Applications. Elsevier, 2002, vol. 2, 535-571
- **D. JONES ; Y. A. PETERS.** Handbook of Pressure Sensitive Adhesives Technology. Satas & Associates, Warwick, 1999, 652-683
- **D. JONES ; Y. A. PETERS.** Handbook of Pressure Sensitive Adhesives Technology. Satas & Associates, 1999, 652-683